# EUROPEAN PATENT APPLICATION

(11) **EP 2 281 754 A2**
(43) Date of publication of application: **09.02.2011**
(21) Application number: 10167437.2
(22) Date of filing: 28.06.2010
(51) Int. Cl.: B65D 43/16, B65D 43/22

(54) **Lock mechanism and combination case**

(30) Priority: 03.08.2009 JP 2009180491
(71) Applicant: Tanita Corporation, Tokyo 174-8630 (JP)
(72) Inventor: Sasaki, Takashi, Itabashi-ku Tokyo 174-8630 (JP); Inoue, Koki, Itabashi-ku Tokyo 174-8630 (JP)
(74) Representative: Grünecker, Kinkeldey, Stockmair & Schwanhäusser Anwaltssozietät

(57) **Abstract**

A locking technique that can lock and unlock a case by one action and in addition can hang the case at the time of, for example, display.

A lock mechanism 40 for locking an upper case 20 and a lower case 30 together is mounted pivotally on the lower case 30. The lock mechanism 40 comprises: a lock portion 70 that is engaged with a lock engaging portion 24 provided in the upper case 20; and a hook portion 50 that is operated to engage and disengage the lock portion 70. The hook portion 50 is provided with lock pieces that act on lock-in pressing portions of the lock portion 70 at the time of engaging the lock portion 70. In addition, the hook portion 50 is provided with lock releasing pieces 53 for releasing engagement.

## Description

### Background of the Invention

The present invention relates to a lock mechanism and a combination case, and particularly to a lock mechanism for locking a combination case that can be separated into at least two parts, and to a combination case provided with such a lock mechanism.

There exist various types of cases for housing an article inside. For example, a home electric appliance is displayed or sold in a state that it is housed in a hard case, made of plastic or the like, that can be divided into two parts, i.e. an upper and lower parts. Further, after a consumer has purchased such an appliance, sometimes it is stored being housed in such a hard case.

Such a hard case is provided with, for example, a sliding lock mechanism for locking an upper case and a lower case together. Also, there is a case provided with a mechanism that releases lock between a case body and a lid member by turning a handle provided in the case body to lift up the lid member (See Patent Document 1).

Patent Document 1: Japanese Utility Model Application Laid-Open No. 1-78602

A storing case for housing a cooking scale or the like is provided with a lock mechanism so that the case is not separated into upper and lower parts when it is displayed by hanging or at the time of storing or carrying. Generally, the conventional lock mechanisms are a sliding type, and to provide a hook portion, it is necessary to arrange lock mechanisms on both sides of the hook portion in consideration of the balance at the time of hanging. Or, in the case where a lock mechanism is provided at one place in the center, it is necessary to make a hook portion larger, which increases costs.

The present invention has been made considering the above-described state, and an object of the invention is to provide a technique that can lock and unlock a case by one action and in addition can hang the case at the time of, for example, display.

### Summary of the Invention

The present invention relates to a lock mechanism. This lock mechanism is a lock mechanism for locking a first case and a second case together, wherein: the lock mechanism comprises: a lock means that is mounted pivotally on the first case and engaged with an engaging portion provided in the second case; and a lock operation means that engages the lock means with the engaging portion and releases engagement of the lock means with the engaging portion; the lock operation means comprises: a lock action means that acts on the lock means when the lock means is to be engaged; and a lock release action means that releases engagement of the lock means; and the lock means comprises: a lock engaging means that is engaged with the engaging portion of the second case; a lock action target means that becomes a target of action of the lock operation means when the engaging portion is engaged with the lock engaging means; and a lock release target means that becomes a target of action of the lock operation means when the engagement is released.
Further, the lock means may comprise a lock guide means that is formed continuously with the lock action target means; and the lock guide means may function as an action target means that becomes a target of action for moving the lock means in engaging direction when the lock operation means moves a position of the lock action means by pivot operation for engaging operation.
Further, lock may be released when the lock operation means pivots to an extent that the lock operation means becomes close to a side of the first case.
Further, the lock release action means may have a cam shape formed on a pivot shaft of the lock release action means.
Further, the lock operation means may be constructed such that the lock operation means can be hung on a member of a prescribed hook shape.
The present invention also relates to a combination case. This combination case comprises: the above-described lock mechanism; the first case; and the second case.
Further, the lock mechanism may be provided on a side of the first case; the lock mechanism may come into an engaged state when the lock means pivots to an extent that the lock means has been turned to the side of the second case; and engagement of the lock mechanism may be released when the lock means pivots to a position close to the first case.

According to the present invention, it is possible to provide a locking technique that can lock and unlock a case by one action and in addition can hang the case at the time of, for example, display.

### Brief Description of the Drawings

Fig. 1 is a perspective view showing a combination case according to an embodiment of the present invention;
Fig. 2 is a view showing a base portion of a lock mechanism provided in a lower case according to the embodiment of the present invention;
Fig. 3 is a view showing a hook portion of the lock mechanism provided in the lower case according to the embodiment of the present invention;
Fig. 4 is a view showing a lock portion of the lock mechanism provided in the lower case according to the embodiment of the present invention;
Fig. 5 is a view showing a locked state of the combination case as a whole according to the embodiment of the present invention;
Fig. 6 is an enlarged view showing the lock mechanism of the combination case according to the embodiment of the present invention, in a state that the hook portion is bent down to the side of an upper case and the combination case is locked;
Fig. 7 is an enlarged view showing the lock mechanism of the combination case according to the embodiment of the present invention, in a state that the hook portion has been turned to be upright and the combination case is locked;
Fig. 8 is an enlarged view showing the lock mechanism of the combination case according to the embodiment of the present invention, in a state that release of the lock is to be started;
Fig. 9 is an enlarged view showing the lock mechanism of the combination case according to the embodiment of the present invention, in a state that the lock is just being released;
Fig. 10 is an enlarged view showing the lock mechanism of the combination case according to the embodiment of the present invention, in a state that the lock has been fully released; and
Fig. 11 is an enlarged view showing the lock mechanism of the combination case according to the embodiment of the present invention, for explaining lock operation.

### Detailed Description

Next, an example (hereinafter, referred to as embodiment) for carrying out the present invention will be described in detail referring to the drawings. In the following, a case for housing a cooking scale is taken as an example. Characteristic structure of the present embodiment lies in its lock mechanism, and the description will be given mainly focusing attention on the lock mechanism. According to this lock mechanism, locking and releasing can be realized by one action, and a component of the lock mechanism functions as a hook used for example when the case is displayed.

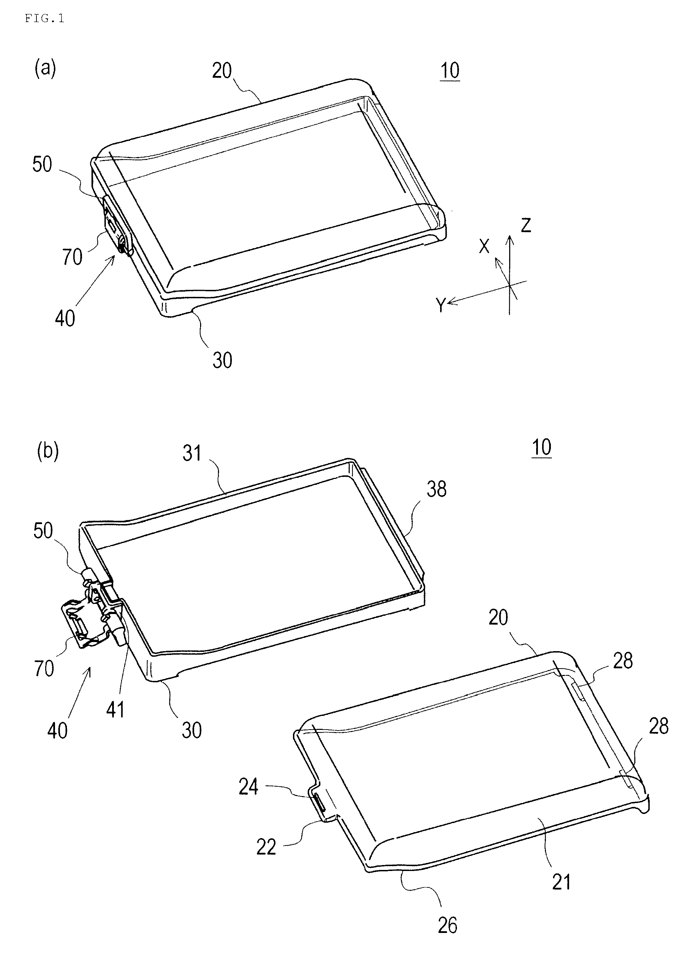

Fig. 1 is a perspective view showing a general configuration of a combination case 10 according to the present embodiment, Fig. 1(a) shows a state that an upper case 20 and a lower case 30 are locked together, and Fig. 1(b) shows a state that the upper case and the lower case 30 are separated. In the following, for the sake of convenience, description will be given taking the positive direction of X in the drawing as the left direction, the negative direction of X as the right direction, the positive direction of Y as the forward direction, the negative direction of Y as the backward direction, the positive direction of Z as the upward direction, and the negative direction of Z as the downward direction.

The combination case 10 is made of resin such as plastic for example, and comprises the upper case 20 and the lower case 30. In the state that the upper case 20 and the lower case 30 are locked together, the combination case 10 has an ordinary box shape in general, and can house a cooking scale within it. Further, the case has a lock mechanism 40 that is used for locking the upper case 20 and the lower case 30 together. In detail, to close the combination case 10, the upper case 20 is put on the lower case 30 to be fitted on it, and the lock mechanism 40 locks the upper case 20 and the lower case 30 together.

The upper case 20 is made of a transparent resin so that the cooking scale or the like contained in the combination case 10 can be seen. When the combination case 10 is seen in a plan view, an outer circumferential frame 21 of the upper case 20 is approximately the same size as an outer circumferential frame 31 of the lower case 30. And, in locking the upper case 20 and the lower case 30 together, the end face of the outer circumferential frame 21 of the upper case 20 abuts against the end face of the outer circumferential frame 31 of the lower case 30. Further, the outer circumferential surface of the end portion of the upper case 20 is provided with a case fitting frame 26 in such a form that the case fitting frame 26 covers not only the outer circumferential surface but also the lower case 30 when the upper case 20 is put on the lower case 30. Owing to this, the upper case 20 and the lower case 30 are positioned desirously for locking the combination case 10.

On the rear surface side (the negative side of Y) of the outer circumferential frame 21 of the upper case 20, two case engaging pawls 28 are provided at prescribed symmetrical positions. These case engaging pawls 28 are formed to extend in the downward and then inward directions so that the case engaging pawls 28 are engaged with a case engaging portion 38 provided in the lower case 30. To fit the upper case 20 on the lower case 30, first it is necessary to engage the case engaging pawls 28 with the case engaging portion 38. A publicly-known technique can be used for this engaging mechanism.

Further, a lock pressing surface 22, which can be fitted on a base portion upper surface 42 of the below-described base portion 41, is formed to protrude forward at the horizontal-center portion of the front side (the positive side of Y) of the upper case 20. The lock pressing surface 22 takes approximately a rectangular shape when it is seen in a plan view. Further, the upper surface of the lock pressing surface 22 is made to be a flat surface, and a lock engaging portion 24, which extends horizontally at a prescribed height to a prescribed length, is formed in the neighborhood of its forward end portion. Further, the inner surface of the lock pressing surface 22 is formed to abut on a rib (a base portion upper surface fitting frame 46) that is formed on the base portion upper surface 42 of the below-described lock mechanism 40.

The rear side (the negative side of Y) of the outer circumferential frame 31 of the lower case 30 is provided with the case engaging portion 38 with which the above-mentioned two case engaging pawls 28 can engage. Here, the case engaging portion 38 has a shape of a rib extending horizontally when it is seen in a plan view.

The lock mechanism 40 is provided at the horizontal center of the forward side (the positive side of Y) of the lower case 30 in order to lock the upper case 20 and the lower case 30 together. The lock mechanism 40 comprises a base portion 41, a hook portion 50 and a lock portion 70.

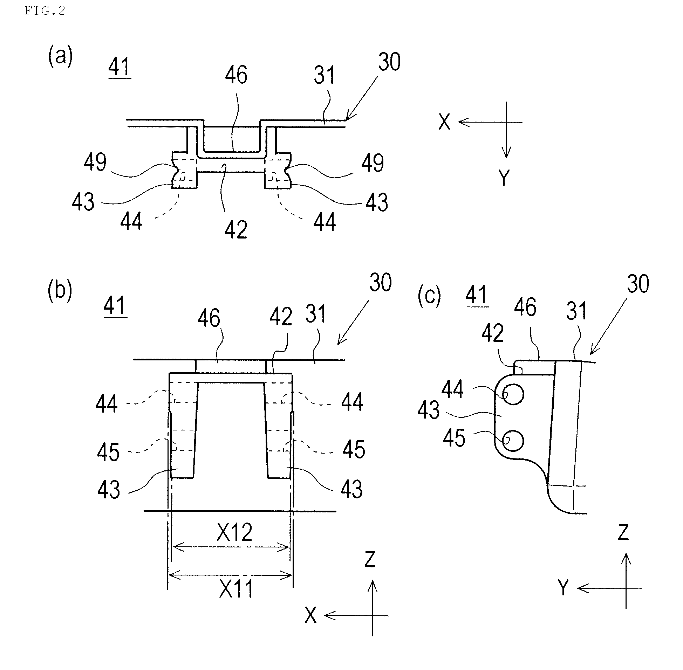

Fig. 2 shows the base portion 41, Fig. 2(a) being a plan view, Fig. 2(b) a front view, and Fig. 2(c) a side view. As shown in the figure, the base portion 41 has approximately a rectangular shape when it is seen in a plan view, and the base portion upper surface 42 is formed such that its height is slightly lower than that of the outer circumferential frame 31 of the lower case 30. And, on the base portion upper surface 42, a rib (hereinafter, referred to as "a base portion upper surface fitting frame 46") that is of a prescribed height and is to be fitted in the inner circumferential surface of the lock pressing surface 22 is formed to extend outward from the outer circumferential frame 31. Further, at the right and left ends of the base portion upper surface 42, ribs are formed as pivot portions 43 in such a way that the pivot portions 43 extend downward from the respective sides of the base portion upper surface 42 perpendicularly to and integrally with the base portion upper surface 42. On the pivot portions 43, the hook portion 50 and the lock portion 70 are mounted pivotally.

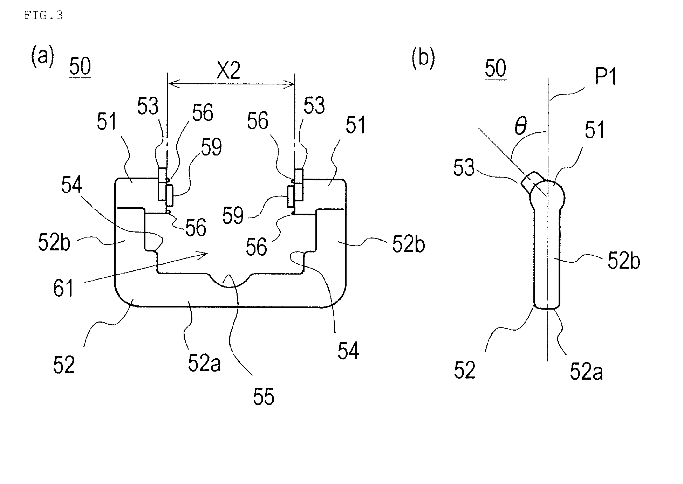

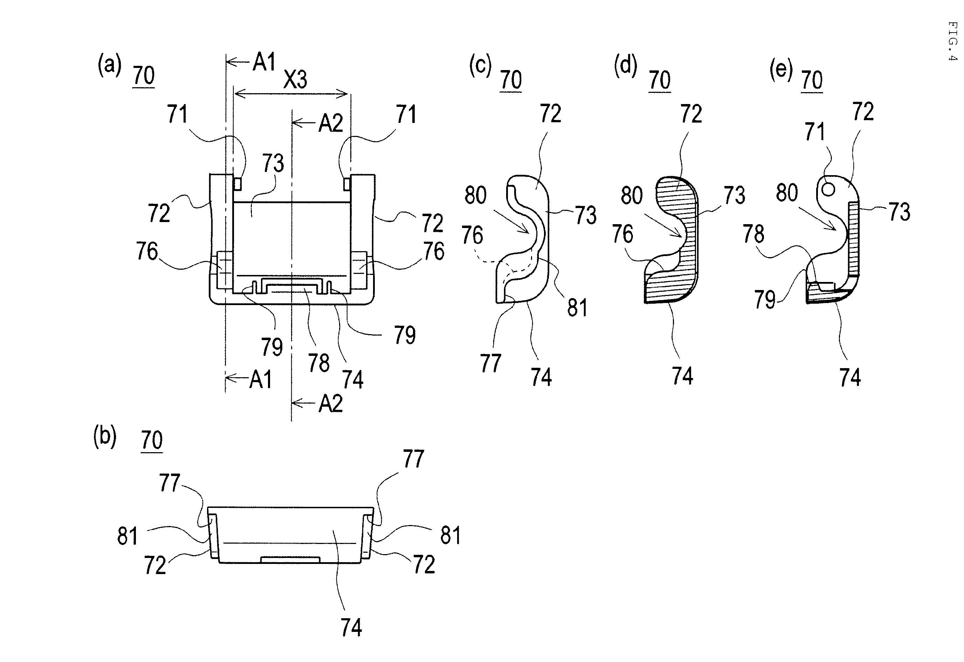

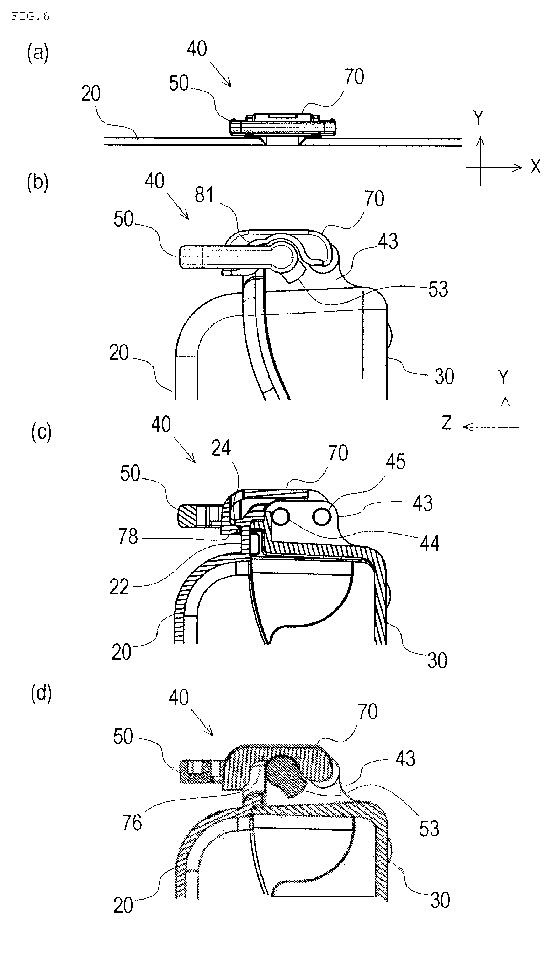

In each of the pivot portions 43, a hook portion pivot hole 44 and a lock portion pivot hole 45 are formed in this order from above. Here, both the hook portion pivot hole 44 and the lock portion pivot hole 45 penetrate through the pivot portion 43 from side to side. In the hook portion pivot hole 44, the below-described hook rotating shaft 59 of the hook portion 50 is pivotally fitted. Further, in the hook portion pivot hole 44, rotation locking concave portions 49 are formed so as to engage with rotation locking convex portions 56 (See Fig. 3) of the hook rotating shaft 59, in order to keep the hook portion 50 in a desired position. For example, the rotation locking concave portions 49 are provided at three positions (one position is shown in the figure) such that the hook portion 50 is positioned in the states shown in the below-described Figs. 6, 7 and 10. Similarly, in the lock portion pivot hole 45, the below-described lock pivot portion 71 (See Fig. 4) of the lock portion 70 is pivotally fitted.

Next, the hook portion 50 and the lock portion 70 will be described in detail. For the sake of convenience, in each of the hook portion 50 and the lock portion 70, the side on which the portion 50, 70 in question is mounted on the pivot portions 43 of the base portion 41 is referred to as a base side, and the side opposite from the base side is referred to as a tip side.

Fig. 3 is a view showing the hook portion 50, Fig. 3(a) being a plan view, and Fig. 3(b) a side view. The hook portion 50 functions as a means for hanging the combination case 10 on a hook at the time of display, and as a means (a lock operation means) for locking/unlocking the upper case 20 and the lower case through the lock portion 70.

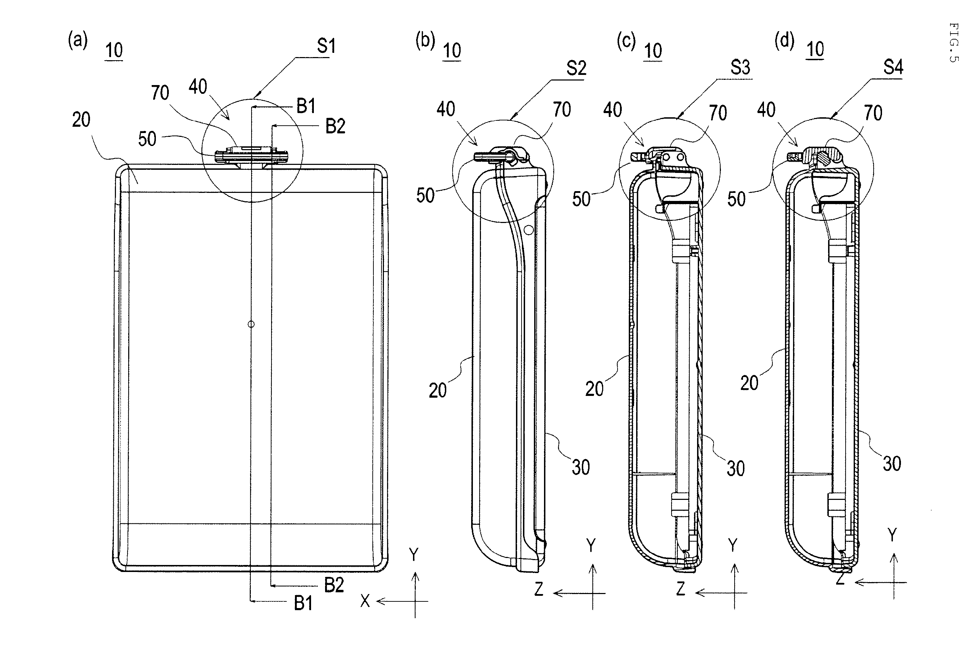

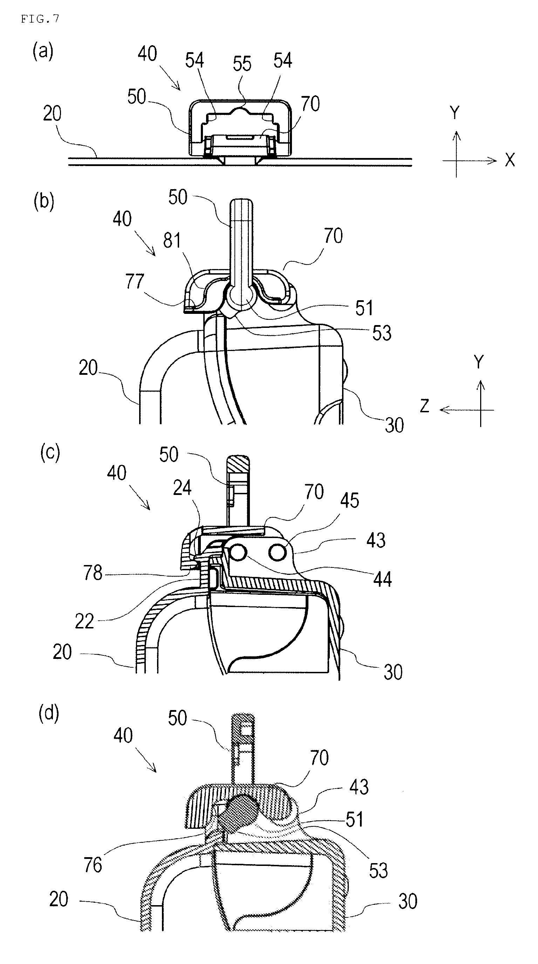

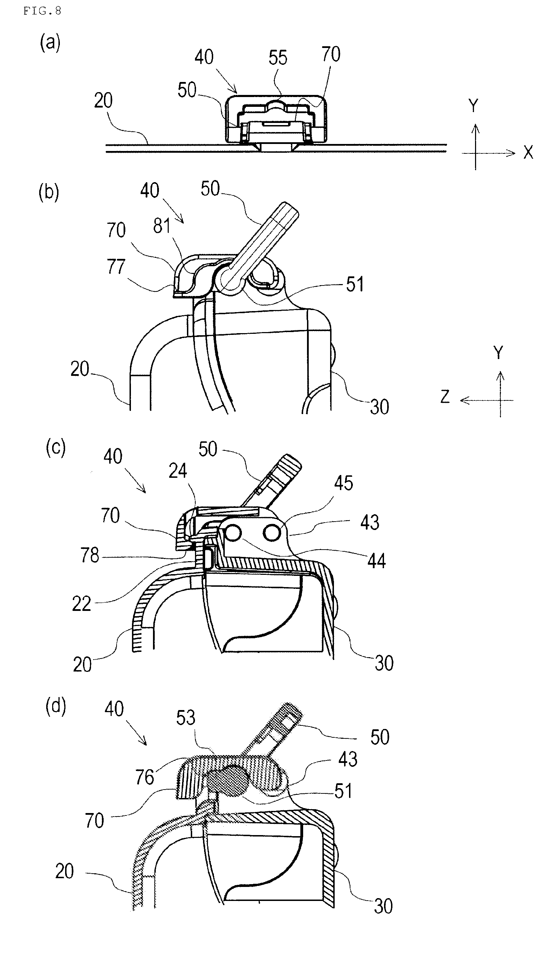

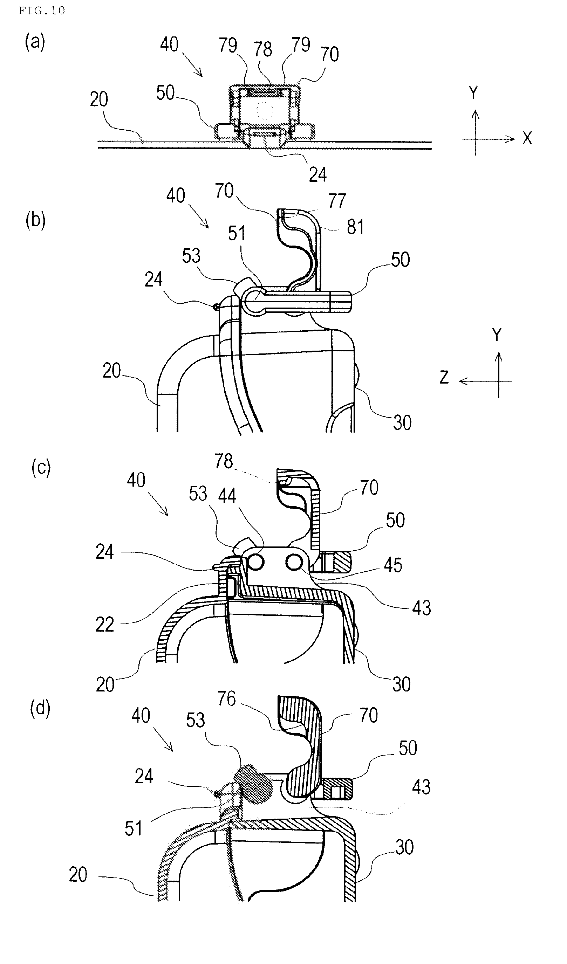

Although details are described later, for example a state that the hook portion 50 has been turned upward (i.e. a state that the hook portion 50 has been turned to the upper case 20 side) as shown in Figs. 5 and 6 is the state that the upper case 20 and the lower case 30 are locked together. Further, as shown in Fig. 10, a state that the hook portion 50 has been turned downward (i.e. a state that the hook portion 50 has been turned to the lower case 30 side) is the state that lock of the upper case 20 and the lower case 30 has been released. Further, once the upper and lower cases have been locked together, the locked state of the upper case 20 and the lower case 30 is maintained even if the hook portion 50 pivots to be in a state shown in Fig. 7 or 8. Thus, even in a state that the hook portion 50 is perpendicular to the lower case 30 as shown in Fig. 7, the locked state of the upper case 20 and the lower case 30 is maintained. In consequence, it is possible to hang the combination case 10 by means of the hook portion 50.

As shown in Fig. 3, the hook portion 50 is formed to comprise: two hook rotating shaft portions 51; and a hook frame 52 extending toward the tip side (i.e. in the downward direction in the figure) from the hook rotating shaft portions 51. In other words, the hook frame 52 comprises: a tip-side frame 52a extending inward on the tip side; and side frames 52b extending to a prescribed length perpendicularly from both ends of the tip-side frame 52a respectively. In the middle of the inner side of the tip-side frame 52a, a hook-receiving concave portion 55 of a concave shape is formed. At the hook-receiving concave portion 55, the combination case 10 is hung on a hook or the like at the time of, for example, display. Further, at the base-side end portion of each side frame 52b, a cylinder-shaped hook rotating shaft portion 51 of a prescribed length is formed to extend inward and in parallel with the tip-side frame 52a. In other words, the hook rotating shafts 51 are formed such that their inner ends face each other. Here, the distance X2 between the inner end portions of the hook rotating shaft portions 51 is nearly equal to the width X11 of the base portion 41 (See Fig. 2(b)).

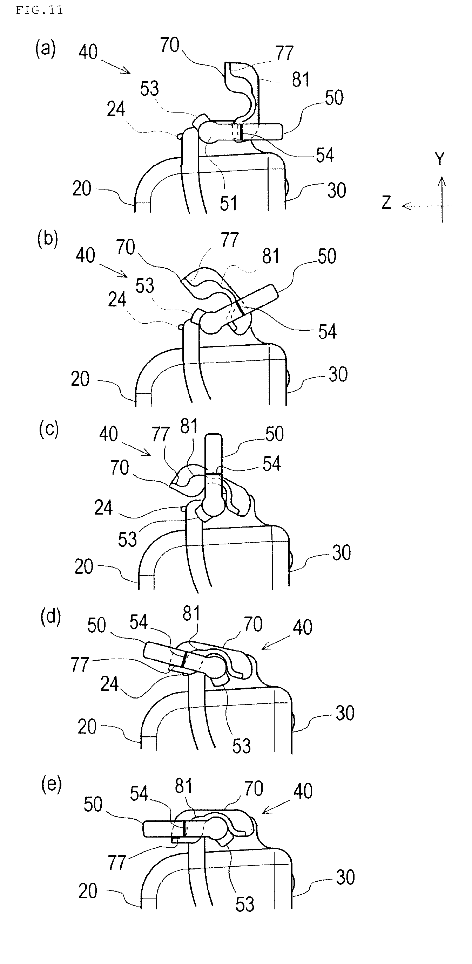

Further, at the inner end of each hook rotating shaft portion 51, a hook rotating shaft 59 is formed. Each hook rotating shaft 59 is pivotally fitted from the outside into the hook portion pivot hole 44 of a pivot portion 43 of the base portion 41. The size of the frame opening 61 defined inside the hook frame 52 is determined such that the lock portion 70 pivotally fitted in the base portion 41 can pass through the frame opening 61. However, the hook frame 52 is provided with lock pieces 54 that abut on part of the lock portion 70 by movement of the hook frame 52 in locking operation to engage the lock portion 70 with the lock engaging portion 24. Thus, the lock pieces 54 function as lock action means. In detail, the lock pieces 54 are formed at inside corners on the tip side of the hook frame 52. These lock pieces 54 are formed to be approximately rectangles that protrude toward the frame opening 61 from the inside corners, i.e. boundaries between the tip-side frame 52a and the side frames 52b, of the hook frame 52. Operation of engaging the lock portion 70 with the lock engaging portion 24 will be described later referring to Fig. 11.

Further, the hook rotation shaft portions 51 are provided with lock releasing pieces 53 in the neighborhood of their inner ends, respectively. Each lock releasing piece 53 is formed to extend perpendicularly to the rotating shaft to a prescribed length from a side of the hook rotation shaft portion 51. Here, as shown in Fig. 3(b), each lock releasing piece 53 is formed to extend in an oblique direction at a prescribed angle θ (for example 45 degrees) with the plane P1 in which the hook frame 52 is formed. The such-shaped lock releasing pieces 53 function as a kind of cam, and release the engaged state (locked state) of the lock portion 70 at a prescribed position as the hook rotation shaft portions 51 rotate. Here, the angle θ is suitably set depending on the shape of the lock portion 70 that is the object of lock releasing. Releasing operation will be described later referring to Figs. 5 - 10.

Further, the inner ends of the hook rotation shaft portions 51 are provided with the rotation locking convex portions 56. The rotation locking convex portions 56 engage with rotation locking convex portions 49 (See Fig. 2(a)) provided in the hook portion pivot holes 44 of the pivot portions 43, to keep the hook portion 50 in a prescribed position by such engagement. The rotation locking convex portions 56 and the rotation locking concave portions 49 are formed in shapes that enable an engaged state to be released by relatively small force.

Fig. 4 is a view showing the lock portion 70, Fig. 4(a) being a plan view, Fig. 4(b) a front view, Fig. 4(c) a side view, Fig. 4(d) a cross section taken along A1-A1, and Fig. 4(e) a cross section taken along A2-A2. As shown in the figure, the lock portion 70 takes approximately a box shape, and is formed to comprise integrally: lock sides 72 provided on both sides; a lock plane 73 formed to be across both lock sides 72; and a lock front 74.

The lock sides 72 are provided with lock pivot portions 71 on the inner sides in the neighborhoods of their ends on the opposite side to the lock front 74, respectively. The distance X3 between the inner surfaces of the lock sides 72 is nearly same as the width X12 (See Fig. 2(b)) of the base portion 41. The lock pivot portions 71 are pivotally fitted in the lock portion pivot holes 45, and thereby the lock portion 70 can pivot on the lock pivot portions 71 as rotating shafts.

Further, as shown in Fig. 4(c), lock guide portions 81 are formed on the outer surfaces of the lock sides 72 respectively. When the hook portion 50 is operated to pivot and thus the lock portion 70 pivots from the released state shown in Fig. 10 mentioned below to the locked state shown in Fig. 5, the lock guide portions 81 function as guides on which the lock pieces 54 abut in the course of their movement. The lock guide portions 81 take a shape corresponding to the movement of the lock pieces 54. Here, the lock guide portions 81 extend perpendicularly from the respective lock sides 72 to a prescribed length and each show a stepped curved surface seen from above.

Further, rotating-shaft-receiving concave portions 80 having shapes adapted for the outer shape of the hook portion 50 are formed in the lock sides 72 in order to avoid contact with the respective hook rotating shaft portions 51 of the hook portion 50 when in the locked state.

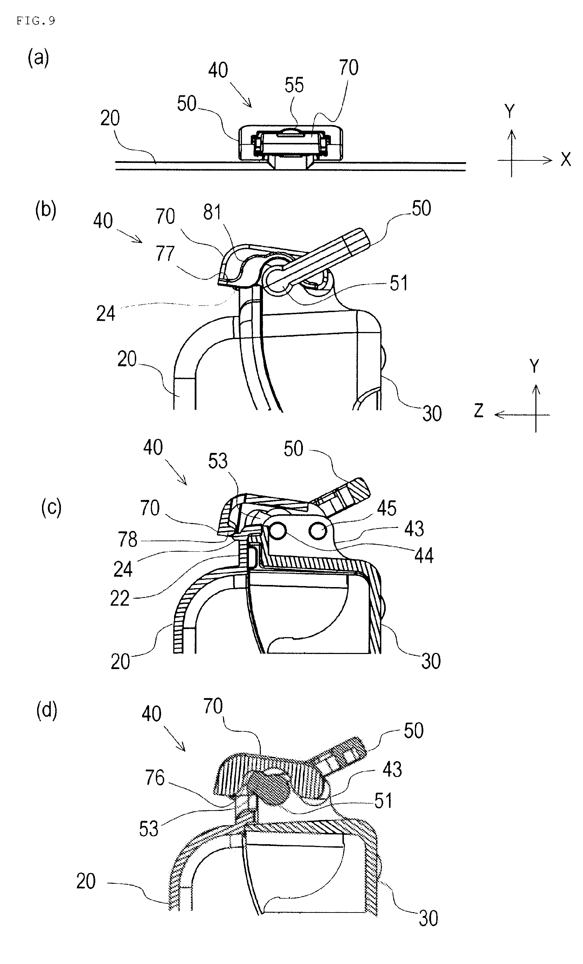

Further, as shown in Figs. 4(a) and 4(d), lock-release pressing portions 76 are formed in the inner surfaces of the respective lock sides 72 so that the lock releasing pieces 53 move and abut on the lock release pressing portions 76 at the time of lock releasing. In detail, the lock-release pressing portions 76 are shaped such that: the lock releasing pieces 53 do not abut on the lock-release pressing portions 76 in the states shown in Figs. 5 - 7; the lock releasing pieces 53 abut on the lock-release pressing portions 76 and lock releasing is started in the state shown in Fig. 9; and lock has been completely released in the state shown in Fig. 10.

Further, as shown in Figs. 4(a) and 4(e), a lock engaging piece 78 of a pawl shape protruding inward, i.e. toward the base portion is formed on the inner surface in the center of the tip side of the lock front 74. Further, on both sides of the lock engaging piece 78, engage holding pieces 79 each of a rib shape are provided at the positions slightly away from the lock engaging piece 78. In locking the lock portion 70, lock-in pressing portions 77 formed on the tip side of the lock guide portions 81 are pressed by the lock pieces 54, to engage the lock engaging piece 78 with the lock engaging portion 24 of the upper case 20. The lock-in pressing portions 77 function as lock action target means that become targets of action of the lock pieces 54 as the lock action means. Further, the engage holding pieces 79 hold the upper surface of the lock pressing surface 22 of the upper case 20.

Now, lock releasing operation and lock operation of the lock mechanism 40 in the combination case 10 of the above-described arrangement will be described. First, description will be given with respect to releasing of lock. Fig. 5(a) is a plan view showing the combination case 10 in the locked state, Fig. 5(b) a right side view, Fig. 5(c) a B1-B1 cross section of Fig. 5(a), and Fig. 5(d) a B2-B2 cross section of Fig. 5(a). Further, Fig. 6(a) is an enlarged view showing the area S1 of Fig. 5(a) concerning the lock mechanism 40, Fig. 6(b) a view showing the area S2 of Fig. 5(b), Fig. 6(c) a view showing the area S2 of Fig. 5(c), and Fig. 6(d) a view showing the area S4 of Fig. 5(d).

When, as shown mainly in Fig. 6(c), the hook portion 50 is positioned on the side of the upper case 20, the lock engaging piece 78 of the lock portion 70 is engaged with the lock engaging portion 24 of the upper case 20, and accordingly the upper case 20 and the lower case 30 are locked together. Further, as shown in Fig. 6(d), the lock releasing pieces 53 of the hook portion 50 exist on the opposite side to the lock-release pressing portions 76, and thus are not in release operation.

Fig. 7 shows a state that the hook portion 50 has been turned through 90 degrees from the state of Fig. 6. Figs. 7(a) -7(d) correspond to Figs. 6(a) - 6(d) respectively. In this state, the lock releasing pieces 53 of the hook portion 50 are close to but do not abut on the lock-release pressing portions 76 yet, as shown in Fig. 7(d). Thus, in the state that the lock engaging piece 78 of the lock portion 70 is engaged with the lock engaging portion 24 of the upper case 20, the hook portion 50 can pivot while keeping the locked state of the lock mechanism 40.

Fig. 8 shows a state that the hook portion 50 has been turned through 45 degrees further from the state of the Fig. 7. Figs. 8(a) - 8(d) correspond to Figs. 7(a) - 7(d) respectively. In this state, the lock releasing pieces 53 just abut on the lock-release pressing portions 76, as shown in Fig. 8(d). In detail, the sides of the lock releasing pieces 53 abut on the lock-release pressing portions 76 respectively. In this state, the lock engaging piece 78 of the lock portion 70 is engaged with the lock engaging portion 24 of the upper case 20. When, however, the hook portion 50 is turned furthermore, releasing of the engaged state between the lock engaging piece 78 and the lock engaging portion 24 is started.

Fig. 9 shows a state that the hook portion 50 is turned furthermore from the state of Fig. 8. Figs. 9(a) - 9(d) correspond to Figs. 8(a) - 8(d) respectively. In this state, the lock releasing pieces 53 turn upward and thereby act on the lock-release pressing portions 76 so as to push it up, as shown in Fig. 9(d). Accordingly, the lock portion 70 pivots on the lock pivot portions 71 so as to depart from the combination case 10. This causes the lock engaging piece 78 of the lock portion 70 to move to get over the lock engaging portion 24 and thereby to release the lock. Here, the figure shows a state that the top of the lock engaging piece 78 is positioned just at the top of the lock engaging portion 24.

Fig. 10 shows a state that the hook portion 50 is moved further from the state of Fig. 9 so that the hook portion 50 has been completely turned to the side of the lower case 30. Figs. 10(a)-10(d) correspond to Figs. 9(a) - (d) respectively. In this state, the lock portion 70 is perpendicular to the combination case 10, as shown in Fig. 10(c). And, the lock engaging piece 78 and the lock engaging portion 24 are completely apart from each other, and the engaged state has been completely released.

Next, referring to Fig. 11, will be described operation in which the lock engaging piece 78 of the lock portion 70 is engaged with the lock engaging portion 24 of the upper case 20 by pivotal operation of the hook portion 50. Fig. 11 is a side view showing the lock mechanism 40. Although in fact the lock pieces 54 are hidden and not visible in this view, the ends of the lock pieces 54 are indicated by a heavy line for the sake of convenience. Fig. 11(a) shows a state that the hook portion 50 has been completely turned to the side of the lower case 30. When, as shown in Fig. 11(b), the hook portion 50 is operated to pivot toward the upper case 20, the lock pieces 54 abut on the lock guide portions 81 and cause the lock portion 70 to pivot. When the hook portion 50 is made to pivot toward the upper case 20 furthermore, the lock pieces 54 moves while abutting on the guide portions 81. At that time, the lock pieces 54 push the lock guide portions 81. And thereby, after the state shown in Fig. 11(c), the lock pieces 54 abut on the lock-in pressing portions 77 as shown in Fig. 11(d). At that time, the hook portion 50 has moved close to the upper case 20. Then, by making the hook portion 50 pivot furthermore so that it has been turned completely to the side of the upper case 20, the state shown in Fig. 11(e) is attained. And, as shown in Figs. 5 and 6, the lock engaging piece 78 of the lock portion 70 is engaged with the lock engaging portion 24 of the lock pressing surface 22.

As described above, the lock releasing operation of the lock mechanism 40 can be carried out by applying relatively small force to the hook portion 50. Further, as for the lock operation of the lock mechanism 40, move of the lock portion 70 to the lock position and actual engaging operation of the lock engaging piece 78 and the lock engaging portion 24 can be simply carried out by one-action operation of the hook portion 50. Further, in the locked state, the hook portion 50 can pivot over a wide range while maintaining the locked state. Accordingly, in a state that the combination case 10 is on display being hung on a hook or the like, even if someone such as a purchaser draws the combination case 10, the locked state can be sufficiently maintained by the lock mechanism 40 only. Further, when such a purchaser draws the combination case 10 in the displayed state, he holds up the lower end (the opposite side to the lock mechanism 40) of the combination case 10. Consequently, the direction in which the hook portion 50 pivots is the direction in which the hook portion 50 is turned toward the side of the upper case 20. This direction of pivoting is the direction of locking, and thus such operation never release lock between the upper case 20 and the lower case 30.

Hereinabove, the present invention has been described based on the embodiment. The above-described embodiment, however, is intended only to illustrate, and it will be known to those skilled in the art that there are many variations in the combination of the components and such variations come within the scope of the present invention.

## Claims

1. A lock mechanism for locking a first case and a second case together, wherein:
the lock mechanism comprises: a lock means that is mounted pivotally on the first case and engaged with an engaging portion provided in the second case; and a lock operation means that engages the lock means with the engaging portion and releases engagement of the lock means with the engaging portion;
the lock operation means comprises: a lock action means that acts on the lock means when the lock means is to be engaged; and a lock release action means that releases engagement of the lock means; and
the lock means comprises: a lock engaging means that is engaged with the engaging portion of the second case; a lock action target means that becomes a target of action of the lock operation means when the engaging portion is engaged with the lock engaging means; and a lock release target means that becomes a target of action of the lock operation means when the engagement is released.

2. A lock mechanism of Claim 1, wherein:
the lock means comprises a lock guide means that is formed continuously with the lock action target means; and
the lock guide means functions as an action target means that becomes a target of action for moving the lock means in engaging direction when the lock operation means moves a position of the lock action means by pivot operation for engaging operation.

3. A lock mechanism of Claim 1 or 2, wherein:
lock is released when the lock operation means pivots to an extent that the lock operation means becomes close to a side of the first case.

4. A lock mechanism of one of Claims 1 - 3, wherein:
the lock release action means has a cam shape formed on a pivot shaft of the lock release action means.

5. A lock mechanism of one of Claims 1 - 4, wherein:
the lock operation means is constructed such that the lock operation means can be hung on a member of a prescribed hook shape.

6. A combination case comprising:
the lock mechanism of one of Claims 1 - 5;
the first case; and
the second case.

7. A combination case of Claim 6, wherein:
the lock mechanism is provided on a side of the first case;
the lock mechanism comes into an engaged state when the lock means pivots to an extent that the lock means has been turned to the side of the second case; and
engagement of the lock mechanism is released when the lock means pivots to a position close to the first case.
